# EUROPEAN PATENT APPLICATION

(11) **EP 2 175 152 A1**
(43) Date of publication of application: **14.04.2010**
(21) Application number: 09251891.9
(22) Date of filing: 28.07.2009
(51) Int. Cl.: F16C 33/58, F16C 33/66, F16C 33/36

(54) **Roller bearing**

(30) Priority: 08.10.2008 US 287330
(71) Applicant: United Technologies Corporation, Hartford, CT 06101 (US)
(72) Inventor: Walker, Brady, Rocky Hill, CT 06067 (US)
(74) Representative: Leckey, David Herbert

(57) **Abstract**

A bearing assembly includes an inner ring (10), an outer ring (4), a plurality of roller elements (6) disposed between the inner ring (10) and outer ring (4) and spaced tangentially apart from each other by a cage (8). The inner ring (10) includes a rib annulus (42). The rib annulus (42) provides a flow of lubricating fluid around a rib face (58).

## Description

### Background

The invention generally relates to the inner ring of a roller bearing. The invention provides better lubrication to the rolling elements.

A bearing consists of four main components; the inner ring, the outer ring, the rolling elements disposed between these rings, and a cage which holds these elements spaced tangentially. There have been problems in the past with proper lubrication of some of the components, namely the inner ring's rib face. Past designs have used lubrication holes spaced around the circumference of the inner ring's rib face. These past designs have relied solely on the inefficient rolling action of the rolling elements to distribute the lubricating oil across the rolling element's face.

### Summary of the Invention

A bearing assembly includes an inner ring, an outer ring, a plurality of roller elements disposed between the inner ring and outer ring and spaced tangentially apart from each other by a cage. The inner ring includes a rib annulus. The rib annulus provides a flow of lubricating fluid around the rib face.

A bearing inner ring includes a cone and a rib. The cone and rib are either separate or integral to each other. The rib includes a rib inner diameter, a rib outer diameter, a rib first end, and an opposing rib second end. The rib second end connects the rib inner diameter and rib outer diameter at one end. The rib second end includes a plurality of rib radial passageways, a rib face, and a rib annulus. The rib annulus is concave in shape and connects the rib radial passageways to the rib face. The rib face is displaced axially away from the rib radial passageways in the direction towards the cone. The combination of the rib and cone together allow the flow of lubricant from the rib lubricating fluid collector into the rib radial passageways, into the rib annulus, and finally providing an annular flow of lubricant around the rib face.

A method for distributing lubricating fluid in an inner ring which includes first supplying the lubricating fluid to a rib lubricating fluid collector. The lubricating fluid is then distributed to a plurality of rib radial passageways. From here the lubricating fluid enters a rib annulus and fills a rib reservoir within the rib annulus. The lubricating fluid then exits the rib reservoir via a rib chamber and distributes the exiting lubricating fluid annularly around the rib face.

These and other features of the present invention can be best understood from the following specification and drawings, the following is a brief description.

### Brief Description of the Drawings

Figure 1 is a cross-sectional side view of a roller bearing assembly in accordance with an embodiment of the invention.
Figure 2 is an enlarged cross-sectional side view of a cone portion in accordance with an embodiment of the invention
Figure 3 is an enlarged cross-sectional side view of a rib portion in accordance with an embodiment of the invention.
Figure 3A is a view of the bottom of Figure 3.
   Figure 3B is a view of the side of the rib of Figure 3.
Figure 4 is an enlarged cross-sectional side view of a rib portion in accordance with an embodiment of the invention.

### Detailed Description of the Preferred Embodiment

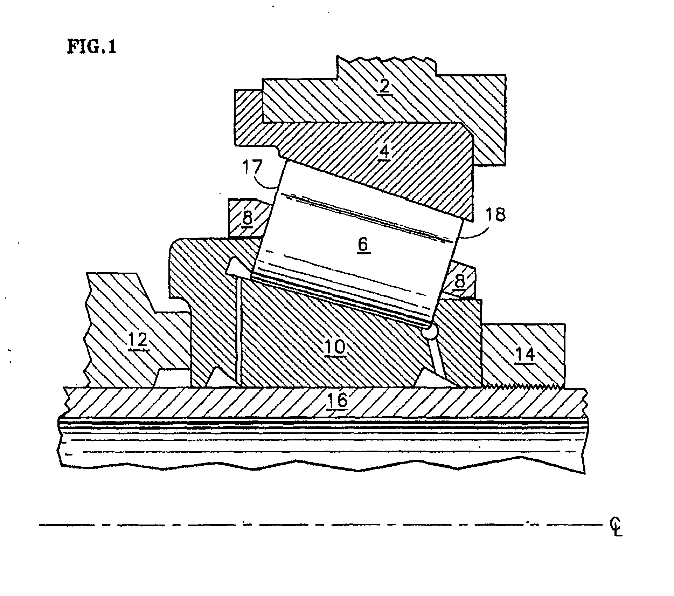

Referring to Figure 1, an embodiment of the invention includes a roller bearing assembly with four main components: the inner ring 10, the rolling element 6, the outer ring 4, and the cage 8. The inner ring 10 is attached to a shaft 16 and secured axially by a seal plate 12 on one end and a nut 14 on the other. The outer ring 4 attaches to a housing 2 and remains stationary relative to this housing 2.

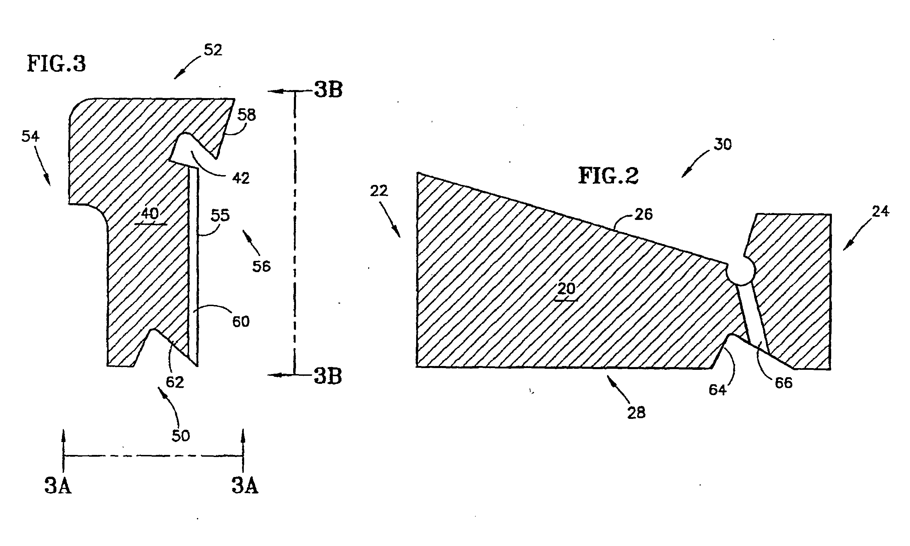

Referring to Figures 1 and 2, during operation in one embodiment, the inner ring 10 is attached to a shaft 16 and rotates at several thousand rpm (revolutions per minute). The outer ring 4 remains stationary. A plurality of rolling elements 6, are spaced tangentially apart from each other by a cage 8, and retained radially between a stationary outer ring 4 and a rotating inner ring 10. The rolling elements 6 through friction with the inner ring 10 rotate about their own axis while traveling around the inner ring's 10 race 26 at a relatively slower tangential velocity to that of the inner ring 10.

Referring to Figures 1, 3, 3B, and 4, during operation in one embodiment, lubricating fluid (not shown) is fed into the rib lubricating fluid collector 62 by a forced lubrication system (not shown). The rotating inner ring 10 produces centrifugal force thereby forcing lubricating fluid from the rib lubricating fluid collector 62 through rib radial passageways 60 where it passes through the rib chamber 47, collecting in the rib reservoir 46, filling the rib reservoir 46 circumferentially full, and then spilling over the rib top 45 of the rib dam 44. The lubricating fluid is then evenly distributed around a continuous 360 degree circumference onto all rolling elements' 6 (a cross section of one rolling element is shown in Fig 1) large diameter end 17 via the rib face 58. Centrifugal force continues to exert itself on the lubricating fluid thereby forcing it against and between the rib face 58 and rolling element 6. The lubricating oil forms a microscopic elasto-hydrodynamic film between the rib face 58 and the rolling element 6 and transmits the axial thrust while preventing contact between these elements.

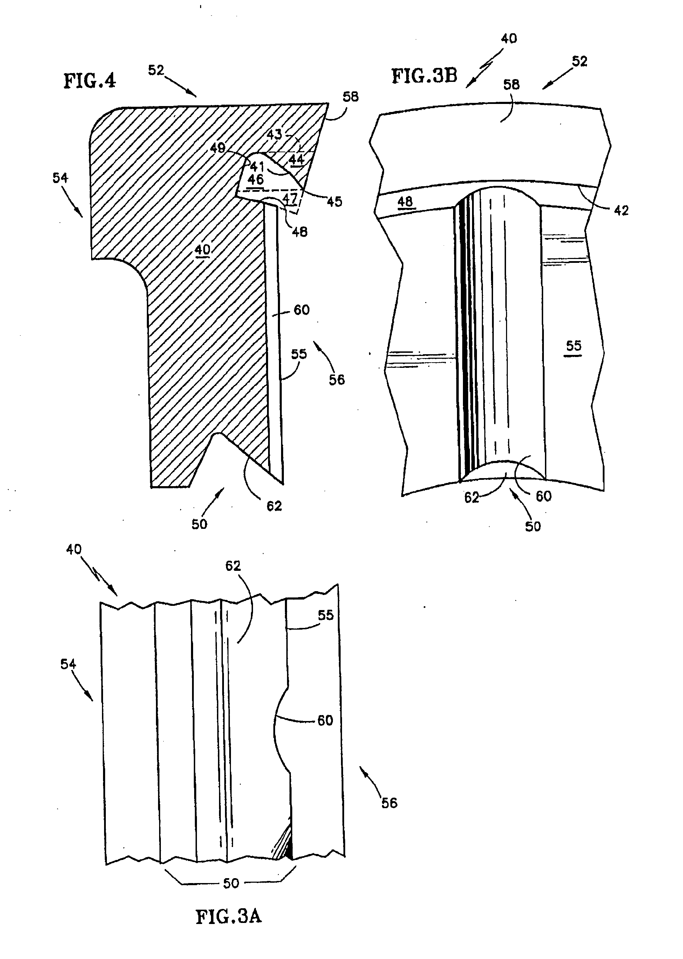

Referring to Figures 1 and 3, in one embodiment, the inner ring 10 is a tapered roller bearing. These tapered rolling elements 6 each have a large diameter end 17 and a small diameter end 18. These ends refer to the relative diameter of the rolling element's 6 two end faces. The inner ring 10, therefore, accommodates the two ends of the rolling element 6. The inner ring accommodates the large diameter end 17 of the rolling element 6 at the rib 40, and more specifically, at the rib face 58.

Referring to Figures 1, 2 and 3, a cross section of the cone 20 is shown. The cone 20, together with the rib 40, makes up an inner ring 10. In one embodiment the rib 40 and the cone 20 are two separate pieces. This eases manufacturing of the rib 40, especially the rib annulus 42. The cone 20 has a cone first end 22, a cone second end 24, a cone inner diameter 28, and a cone outer diameter 30. The rolling elements 6 travel around the race 26. The cone 20 supplies lubricating fluid to the rolling element 6 via the cone lubricating fluid collector 64 and cone radial passageways 66.

Referring to Figures 1, 3 and 4, the rib 40 has a rib first end 54, a rib second end 56, a rib inner diameter 50, and a rib outer diameter 52. The rib inner diameter (50) is aligned axially with the cone inner diameter (28). The rib 40 provides lubricating fluid to the rolling element 6 via the rib lubricating fluid collector 62, rib radial passageways 60, and the rib annulus 42. The rib annulus 42 is comprised of rib reservoir 46 and a rib chamber 47. The rib reservoir 46 is defined by a rib reservoir back face 49, a rib reservoir front face 41, and the height of the rib dam 44 where the rib dam 44 comes to its maximum radial distance at the rib top 45. The rib dam 44 can be defined radially distally by the rib base 43, and a rib top 45. Axially the rib dam can be defined by the rib face58 on one end and on the opposite end by the rib reservoir front face 41. The rib chamber 47 can be thought of as a wedge, defined on one end by where the rib chamber 47 meets the rib reservoir 46. A second end of the rib chamber 47 can be defined by the oil land 48, rib radial passageways 60 and partially by the race of the cone 26. A third end can be defined by the partial rolling element 6 large diameter end 17. When the rib 40 and cone 20 are integral pieces, the rib radial passageways 60 are circular holes. When the rib 40 and cone 20 are separable pieces, the rib radial passageways 60 are scalloped or arcuate in shape, and formed only in the rib 40 (as seen in Figures 3A and 3B). The rib radial passageway surface 55 is the area that contacts the cone first end 22 area to form an inner ring 10 when the rib 10 and cone 20 are separable. The plurality of rib radial passageways 60 are equally angled apart from one another.

Referring to Figure 3, it is important to note that the total volume of lubricating fluid that the rib radial passageways 60 can deliver is not greater than the volume that the rib chamber 47 can exhaust. In certain embodiments, the rib radial passageways 60 have a total volume less then the volume of the rib annulus. A volume of lubricating fluid may be supplied to the rib annulus 42 which is approximately equal to the total volume of the rib radial passageways 60.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described.

## Claims

1. A bearing assembly comprising:
an inner ring (10);
an outer ring (4);
a plurality of roller elements (6) disposed between said inner ring (10) and outer ring (4) and spaced tangentially apart from each other by a cage (8); and wherein said inner ring (10) comprises a rib annulus (42) which provides a flow of lubricant annularly around a rib face (58).

2. The bearing assembly according to claim 1 wherein said outer ring is stationary.

3. A bearing inner ring (10) comprising:
a cone (20);
a rib (40), said rib (40), being integral with said cone (20) or separate from and detachably engaged to said cone (20);
said rib (40) having a rib inner diameter (50), a rib outer diameter (52), a rib first end (54), and an opposing rib second end (56) connecting said rib inner diameter (50) and rib outer diameter (52);
said rib second end (56) defining a plurality of rib radial passageways (60), a rib face (58), and a rib annulus (42) connecting said rib radial passageways (60) and said rib face (58), said rib annulus (42) receiving a flow of lubricant from said rib radial passageways (60) and providing a flow of lubricant annularly around said rib face (58);
said rib face (58) being axially displaced towards said cone (20) from said rib radial passageways (60);

4. The inner ring according to claim 3 wherein said rib face (58) is between said rib outer diameter (52) and said rib annulus (42).

5. The inner ring according to claim 3 or 4 wherein said rib radial passageways (60) have an arcuate cross section or a circular cross section.

6. The inner ring according to claim 3, 4 or 5 wherein a plurality of said rib radial passageways (60) have a total volume less than a total volume of said rib annulus (42).

7. The inner ring according to any of claims 3 to 6 wherein a cone inner diameter (28) is aligned axially with said rib inner diameter (50).

8. The inner ring according to any of claims 3 to 7 wherein said rib (40) further comprises a rib dam (44).

9. The inner ring according to claim 8 wherein said rib dam (44) is partially defined on one end by said rib face (58) and the opposite end by a rib reservoir front face (41).

10. The inner ring according to claim 8 wherein said rib dam (44) has a radial base (43) and a radial top (45), said radial base (43) being radial distally greater than said radial top (45) as measured from said rib inner diameter (50).

11. The inner ring according to any of claims 3 to 10 wherein said rib annulus (42) further comprises a rib reservoir (46), and, optionally a rib chamber (47) defined by the volume of said rib reservoir (46) subtracted from the volume of said rib annulus (42).

12. The inner ring according to claims 10 and 11 wherein the radial distance of said radial base (43) equals approximately the radial depth of said rib reservoir (46).

13. A method for distributing lubricating fluid in an inner ring (10) comprising:
supplying the lubricating fluid to a rib lubricating fluid collector (62);
distributing the lubricating fluid from said rib lubricating fluid collector to a plurality of rib radial passageways (60) and then to a rib annulus (42);
filling a rib reservoir (46) within said rib annulus (42) with the lubricating fluid;
wherein the lubricating fluid exits said rib reservoir (46) via a rib chamber (47) when said rib reservoir (47) becomes full; and
distributing the exiting lubricating fluid annularly around a rib face (58).

14. The method according to claim 16 further comprising flowing said exiting lubricating fluid over a rib top (45) of a rib dam (44) prior to distributing the lubricating fluid over the rib face (58).

15. The method according to claim 13 or 14 further comprising supplying a volume of lubricating fluid to the rib annulus (42) which is approximately equal to the volume of the total volume of said rib radial passageways (60).
